# EUROPÄISCHE PATENTSCHRIFT

(11) **EP 3 387 052 B1**
(45) Veröffentlichungstag und Bekanntmachung des Hinweises auf die Patenterteilung: **15.05.2019**
(21) Anmeldenummer: 17745658.9
(22) Anmeldetag: 11.07.2017
(51) Int. Cl.: C08J 9/12, C08J 9/14

(54) **BARRIERESCHICHTEN**
BARRIER LAYERS
COUCHES BARRIÈRES

(30) Priorität: 20.07.2016 CH 9362016
(43) Veröffentlichungstag der Anmeldung: 17.10.2018
(73) Patentinhaber: Brugg Rohr Ag Holding, 5200 Brugg (CH)
(72) Erfinder: KRESS, Jürgen, 8966 Oberwil-Lieli (CH); DAMBOWY, Christian, 5412 Gebenstorf (CH)
(74) Vertreter: Grimm, Siegfried
(86) Internationale Anmeldenummer: PCT/EP2017/067413
(87) Internationale Veröffentlichungsnummer: WO 2018/015215

(56) Entgegenhaltungen:
- WO-A1-2008/121785
- WO-A1-2011/038081
- WO-A1-2016/127267
- US-A- 5 977 271

## Beschreibung

Die Erfindung betrifft die Verwendung von speziellen Polymeren als Barriereschichten, insbesondere als Barriereschichten in Verbundmaterialien. Diese Barriereschichten zeigen eine selektive Barrierewirkung gegenüber verschiedenen Gasen, wobei die Barrierewirkung gegenüber HFOs speziell gut ist. Aufgrund dieser Eigenschaften können solche Barriereschichten die Dämm- und Isolationseigenschaften, beispielsweise in thermisch gedämmten Rohren, positiv beeinflussen.

Schaumstoffe für die Dämmung und Isolierung sind bekannte Materialien. Solche Schaumstoffe finden zahlreiche Anwendungen, insbesondere in der thermischen Isolation und sind somit wichtige Komponenten in zahlreichen Anwendungen. Die Isolationseigenschaften von Schaumstoffen hängen von vielen Parametern ab, unter anderem von der Zusammensetzung der Zellgase.

Eine bekannte Klasse de Schaumstoffe sind die Polyurethan Schäume (PU), diese werden aus einem Polyol und einem Isocyanat gebildet. Zu deren Herstellung wird meist auch noch ein physikalisches Treibmittel zugegeben, typischerweise wird dies in die Polyol Komponente eingerührt und diese dann mit dem Isocyanat in einem Hochdruckmischkopf vermischt unmittelbar vor der Dosierung des Zweikomponenten Gemischs (2K). Dieses physikalische Treibmittel ist eine erste Komponente von Zellgasen in PU-Schäumen. Es findet sich in der Polyol Komponente typischerweise eine gewisse Menge Wasser, ein typischer Bereich wäre 0.5-1.5 Gewichtsprozent. Dieses Wasser hat folgende Reaktionen zur Folge: a) Reaktion mit dem Isocyanat zur Carbaminsäure, welche aber unbeständig ist und sofort unter Abspaltung von Kohlendioxid zu dem entsprechenden Amin zerfällt. b) Reaktion des so entstandenen Amins mit einem weiteren Isocyanat Molekül zu dem entsprechenden Harnstoff.

Diese Reaktion führt zur Bildung weiterer Zellgase in PU-Schäumen und unterstützt so den Schäumprozess. Der entstehende Harnstoff ist vorteilhaft für die thermische Stabilität des entstandenen Schaums. Details dazu sind beschrieben in Oertel et al (Polyurethane, Hrsg. Günter Oertel, 3. Auflage 1993, Hanser Verlag, S.13; S.94).

Hydrofluorolefine (HFOs) sind eine bekannte Klasse von Verbindungen, diese sind im strikten Gegensatz zu Fluorchlorkohlenwasserstoffen (HFCs) für ihr geringes Treibhauspotential (Global Warming Potential, GWP) bekannt. Da HFOs auch unbrennbar sind, werden sie als Treibmittel eingesetzt, wie z.B. in WO2016/094762 erwähnt. HFOs beeinflussen die Isolationseigenschaften von Schaumstoffen positiv. Auch WO 2011/038081 beschreibt Treibmittel aus CO2/HFO Gemischen.

Polymere Materialien weisen generell eine gewisse Durchlässigkeit für Permeenten aller Art (gasförmig oder flüssig) auf. Polymere unterscheiden sich aber markant in der jeweiligen Menge, die ein bestimmter Permeent durch ein gegebenes Material pro Zeiteinheit migriert. Die Verwendung von polymeren Materialien als Barriereschichten für die Gase der Luft, insbesondere Stickstoff (N₂), Sauerstoff (O₂), Kohlendioxid (CO₂) und Wasser (H₂O), ist an sich bekannt. So beschreibt EP 1355103 eine Barriere auf der Basis von EVOH oder PVDC, welche die Diffusion der Gase CO₂, N₂, O₂ reduziert aber gleichzeitig eine Durchlässigkeit für Wasser bietet. EP2340929 beschreibt eine EVOH-Schicht als Barriere gegen O₂ und CO₂. WO92/13716 beschreibt EVOH-Schichten als Barriere gegen HFCs. Wie oben ausgeführt, weisen HFCs grundsätzlich verschiedene Eigenschaften auf, wenn verglichen mit HFOs. Ferner beschreibt WO 2016/127267 die Verwendung Polyketon-Schichten als Gasbarriere in thermisch gedämmten Leitungsrohren.

Vor diesem Hintergrund erscheint es wünschenswert, Schaumstoffe mit verbesserten Isolationseigenschaften zur Verfügung zu stellen.

Ferner erscheint es wünschenswert, Materialien mit Barriereeigenschaften, insbesondere mit selektiven Barriereeigenschaften, zur Verfügung zu stellen.

Die vorstehend umrissenen Aufgaben werden gemäss den unabhängigen Ansprüchen gelöst. Die abhängigen Ansprüche stellen vorteilhafte Ausführungsformen dar. Weitere vorteilhafte Ausführungsformen sind der Beschreibung und den Figuren zu entnehmen. Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein.

Die vorliegende Erfindung wird nachstehend detailliert beschrieben. Es versteht sich, dass die verschiedenen nachstehend offenbarten und beschriebenen Ausführungsformen, Bevorzugungen und Bereiche beliebig miteinander kombiniert werden können. Ausserdem können, in Abhängigkeit von der Ausführungsform, einzelne Definitionen, Bevorzugungen und Bereiche nicht zur Anwendung kommen. Ferner schliesst der Begriff "umfassend" die Bedeutungen "enthaltend" und "bestehend aus" ein.

Die in der vorliegenden Erfindung verwendeten Begriffe werden im allgemein üblichen, dem Fachmann geläufigen Sinn verwendet. Sofern sich aus dem direkten Zusammenhang keine andere Bedeutung ergibt, haben die folgenden Begriffe dabei insbesondere die hier angegebene Bedeutung / **Definitionen.**

Die vorliegende Erfindung wird weiterhin durch die **Figuren** illustriert; neben der Nachfolgenden Beschreibung sind weitere Ausgestaltungen der Erfindung diesen Figuren zu entnehmen.

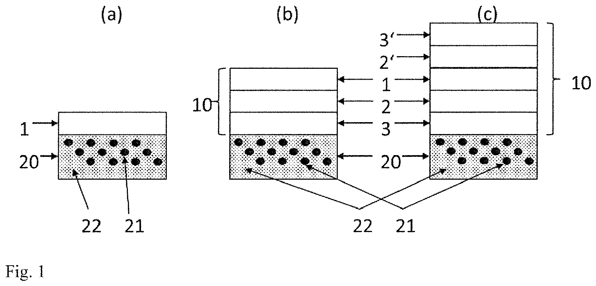

**Fig. 1** zeigt schematisch den Aufbau eines erfindungsgemässen Verbundmaterials (10) auf einer Schaumstoffisolierung (20) im Querschnitt. Dabei ist (22) das Polymer der Isolierung (20) und (21) das HFO-haltige Zellgas der Isolierung (20). Gezeigt werden verschiedene Ausgestaltungen der Barriere (1) :
(a) als selbsttragendes Strukturelement (1) (nicht erfindungsgemäss) ;
(b) als Verbundmaterial (10) mit aussen liegender Barriere (1), Haftvermittler (2) und thermoplastischen Kunststoff (3) ;
(c) als Verbundmaterial (10) mit innen liegender Barriere (1), Haftvermittler (2, 2') und thermoplastischen Kunststoff (3, 3').

Die Erfindung betrifft somit die Verwendung einer Polymerschicht wie in Anspruch 1 definiert als Barriere (1) für Gase, wobei das Polymer der Polymerschicht ein Co-Polymer aus Ethylen und Vinylalkohol oder ein Co-Polymer aus Ethylen und Kohlenmonoxid oder ein Co-Polymer aus Ethylen und Kohlenmonoxid und Propylen umfasst; und wobei das besagte Gas ausgewählt ist aus der Gruppe der Hydrofluorolefine wie in Anspruch 1 definiert.

Es zeigt sich, dass Hydrofluoolefine HFO, insbesondere als Zellgas (21) in einem Schaumstoff (22), sehr gut durch die genannte Polymerschicht (1) zurück gehalten werden. Dadurch kann bspw. der Verlust an diesen Zellgasen in einem Schaumstoff über die Zeit minimiert werden um so die thermische Dämmwirkung dieses Schaumstoffs für einen langen Zeitraum erhalten werden.

Es zeigt sich ferner, dass die hier beschriebene Polymerschicht (1) eine relativ hohe Durchlässigkeit gegen Kohlendioxid aufweist. So kann die Menge des Kohlendioxids, welches bspw. bei der Bildung eine Polyurethanschaums (PU) anfällt, über die Zeit die Polymerschicht (1) durch Diffusion verlassen.

Es zeigt sich ferner, dass Herstellverfahren für die hier beschriebene Verwendung einfach und kostengünstig implementierbar sind und sich in einen kontinuierlichen Prozess integrieren lassen.

Diese Verwendung und die einzelnen Merkmale sollen nachstehend erläutert werden.

**Barriere (1)** : Diffusionsbarrieren sind in vielen Bereichen der Technik, bspw. im Bereich Leitungsrohre / Rohrsysteme, bekannt.

Erfindungsgemäss ist die Barriere (1) als Schicht ausgebildet. Erfindungsgemäss kann die Barriere in einer einzigen Schicht vorliegen oder in mehreren, voneinander getrennten Schichten.

Die Werte für die Permeabilität von polymeren Materialien schwanken über sehr weite Bereiche; mehr als den Faktor 10⁵. Die Kriterien, ob eine Barrierewirkung vorliegt, sind für verschiedene Permeenten verschieden.

Die Messwerte für O₂, N₂ und CO₂ (bestimmt nach der ISO 15105-1) werden üblicherweise in der Einheit cm³/m²*Tag*bar angegeben. Bei Werten kleiner 20 spricht man von einer guten Barrierewirkung, das Polymer wird als impermeabel angesehen. Bei Werten grösser 100 ist keine Barrierewirkung mehr vorhanden, das Polymer wird als permeabel angesehen. Bei Werten dazwischen wird das Polymer als teilweise permeabel angesehen.

Die Messwerte für HFO (bestimmt gemäss ISO 15105-1:2007-10), Cp (bestimmt gemäss ISO 15105-2:2003-02) und Wasser (bestimmt gemäss ISO 15105-3:2003-01) werden üblicherweise in der Einheit ml/m²*Tag angegeben. Bei Werten kleiner 3 spricht man von einer guten Barrierewirkung, die Polymer wird als impermeabel angesehen. Bei Werten grösser 20 ist keine Barrierewirkung mehr vorhanden, das Polymer wird als permeabel angesehen. Bei Werten dazwischen wird das Polymer als teilweise permeabel angesehen.

Die Erfindung betrifft auch die Verwendung einer Polymerschicht als **selektive Barriere** (1) für Gase, wobei das **Polymer** der Polymerschicht ein Co-Polymer aus Ethylen und Vinylalkohol oder ein Co-Polymer aus Ethylen und Kohlenmonoxid oder ein Co-Polymer aus Ethylen und Kohlenmonoxid und Propylen wie hier beschrieben umfasst; und wobei besagte Barriere bevorzugt
- impermeabel für Gase aus der Gruppe der HFOs ist;
- permeabel für Wasser und Wasserdampf ist;
- teilweise permeabel für Kohlendioxid ist;
- impermeabel für die Gase aus der Umgebung, insbesondere Stickstoff und Sauerstoff und Luft, ist; oder
wobei besagte Barriere bevorzugt
- impermeabel für Gase aus der Gruppe der HFOs ist;
- teilweise permeabel für Wasser und Wasserdampf ist;
- impermeabel für Kohlendioxid ist;
- impermeabel für die Gase aus der Umgebung, insbesondere Stickstoff und Sauerstoff und Luft, ist.

Es hat sich gezeigt, dass die hier beschriebenen Barrieren (1) diese Anforderungen sehr gut erfüllen.

Vorteilhaft weist die Polymerschicht (1) folgende Diffusionskoeffizienten auf:
- HFOs kleiner als 3 ml/m²*Tag
- H₂O (gas) grösser als 3 ml/m²*Tag
- CO₂ grösser als 20 cm³/m²*Tag*bar
- O₂ kleiner als 20 cm³/m²*Tag*bar
- N₂ kleiner als 20 cm³/m²*Tag*bar

Diese Werte können insbesondere durch Auswahl der Polymere und / oder der Schichtdicke erreicht werden. Solche Werte haben sich als vorteilhaft für zahlreiche Anwendungen herausgestellt, insbesondere im Bereich der thermischen Isolierung, bspw. von Leitungsrohren.

Barrierewirkung gegen HFOs: Wegen Ihrer geringen Wärmeleitfähigkeit sind HFOs vorteilhafte Zellgase in Wärmedämmungen. Deren Zurückhalten im Dämmmaterial ist entsprechend vorteilhaft. Die hier beschriebene Schicht ermöglicht, dass die Diffusion von HFOs durch die Schicht (1) reduziert wird. Diese Eigenschaft ist wichtig, bspw. um die Isolationsfähigkeit eines Leitungsrohrs / Rohsystems über längere Zeit sicher zu stellen.

Barrierewirkung gegen Wasserdampf: Dieser sollte nicht zu stark an der Diffusion gehindert werden, da sonst das Risiko dessen Anreicherung in der Dämmung und somit zu einer Verschlechterung der Wärmeleitfähigkeit besteht. Ausserdem beinhaltet die Anreicherung von Feuchtigkeit in der Dämmung auch das Risiko der Schädigung derselben. Die hier beschriebene Schicht ermöglicht in einer vorteilhaften Ausgestaltung ferner, dass die Diffusion von Wasser aus der Wärmedämmung heraus ermöglicht wird. Diese Eigenschaft ist insbesondere wichtig für Leitungsrohre / Rohrsysteme, deren Mediumrohr aus Kunststoff besteht. Wird in derartigen Leitungsrohren / Rohrsystemen ein wässriges Medium transportiert, kann Wasser aus dem Medium durch das Leitungsrohr in die Dämmung gelangen und so die Isolationsfähigkeit vermindern und die Schaumstoffisolierung schädigen. Barrierewirkung gegen Kohlendioxid: Die hier beschriebene Schicht ermöglicht in einer vorteilhaften Ausgestaltung ferner, dass eine gewisse Durchlässigkeit für CO₂ gegeben ist. Ein besonders geeigneter Wert für die CO₂ Durchlässigkeit liegt im Bereich von 0.5 - 100 cm³/m²*Tag*bar. Barrierewirkung gegen Sauerstoff: O₂ kann zur oxidativen Schädigung des Dämmmaterials führen, speziell bei hohen Gebrauchstemperaturen wie sie in Kunststoffmantelrohren (KMR) vorliegen. Daher sollten Zellgase frei von O₂ sein und deren Diffusion in die Dämmung vermieden werden. Barrierewirkung gegen Stickstoff: Von N₂ ist zunächst keine schädigende Wirkung auf den PU-Schaumstoff zu erwarten, aber die thermische Leitfähigkeit von N₂ im Vergleich zu den anderen Zellgasen ist mit 26 mW/m*K markant höher. Dadurch würde sich bei dessen Anwesenheit im PU-Schaum auch dessen Wärmeleitfähigkeit erhöhen, was nicht erwünscht ist.

Die Barriereschicht kann entsprechend an das gewünschte Anforderungsprofil angepasst werden. Für das Ziel, Schäume mit einer möglichst niedrigen Wärmeleitfähigkeit zu realisieren und diese geringe Wärmeleitfähigkeit auch über einen langen Zeitraum zu erhalten, wird angestrebt, die Gase Sauerstoff und Stickstoff an der Diffusion in den Schaum hinein zu hindern; die Diffusion des CO₂ aus dem Schaum heraus zu ermöglichen; die Diffusion von HFOs aus dem Schaum heraus zu hindern. Je besser diese gelingt, desto bessere Eigenschaften weist der Schaum auf.

Die Kombination von Zellgasen (21) aus der Gruppe der HFOs und Barriereschichten (1) gemäß den hier beschriebenen Formeln (II), (III), (IV) führt zu besonders guten, überadditiven Isolationseigenschaften bei thermisch isolierten Leitungsrohren. Ein derartiges positives Zusammenwirken dieser Komponenten ist überraschend. Ohne sich an eine Theorie gebunden zu fühlen kann dieser überadditive Effekt auf die Barriereeigenschaften der Materialien gemäss Formeln (II), (III), (IV) zurück geführt werden.

**Polymer:** Wie dargelegt, umfasst die Barriere ein Co-Polymer des Ethylens mit Kohlenmonoxid (sogenannte Polyketone) oder mit Vinylalkohol (sogenannte Ethylvinylalkohole).

**Polyketone (PK):** In einer vorteilhaften Ausgestaltung umfasst die Barriere ein Polymer, welches Polyketone enthält oder aus Polyketonen besteht. Entsprechend umfasst die Polymerschicht Polyketone und Blends von Polyketonen. Polyketone sind an sich bekannte Materialien und charakterisiert durch die Keto-Gruppe (C=O) in der Polymerkette.

In dieser Ausgestaltung weist dass das Polymer vorteilhaft zu 50-100 Gew.%, bevorzugt zu 80-100 Gew.%, Struktureinheiten Formeln (II) oder der Formel (III) auf. 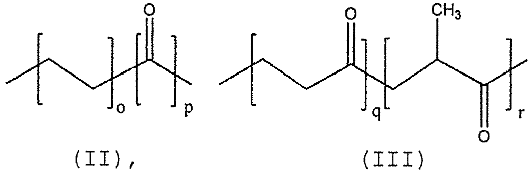 worin
o für 1 oder 2, bevorzugt 1, steht,
p für 1 oder 2, bevorzugt 1, steht,
q für 1-20 steht und
r für 1-20 steht.

In einer Ausgestaltung enthält das Polymer zu 90 - 100 Gew.%, Struktureinheiten der Formel (II), worin o und p für 1 stehen.

In einer Ausgestaltung enthält das Polymer zu 90 - 100 Gew.%, Struktureinheiten der Formel (III), worin q und r unabhängig voneinander für 1-20 stehen.

In einer Ausgestaltung weist das Polymer der Formel (II) ein Molgewicht Mw von über 20'000, insbesondere von 50'000 - 500'000, auf. In einer Ausgestaltung weist das Polymer der Formel (III) ein Molgewicht Mw von über 20'000, insbesondere von 50'000 - 500'000, auf.

In einer Ausgestaltung weist das Polymer der Formel (II) bzw. der Formel (III) eine Schmelztemperatur von über 200°C auf (gemessen mit DSC, 10 K/min gemäss ISO 11357-1/3).

In einer Ausgestaltung weist das Polymer der Formel (II) bzw. der Formel (III) eine niedrige Wasseraufnahme, bevorzugt von unter 3 %, gemessen gemäss der DIN EN ISO 62:2008-05 (Sättigung in Wasser bei 23 °C) auf.

Polyketone sind durch katalytische Umsetzung von Kohlenmonoxid mit den entsprechenden Alkenen, wie Propen und/oder Ethen, erhältlich. Solche Polyketone werden auch als aliphatische Polyketone bezeichnet. Diese Polymere sind kommerziell erhältlich, bspw. als Polyketone Copolymer (Formel II) oder Polyketone Terpolymer (Formel III) der Fa. Hyosung. Solche Polyketone sind ferner unter dem Handelsnamen Akrotek® PK kommerziell erhältlich.

PKs (II, III) zeigen im Vergleich zu EVOHs (IV) schlechtere Barriereeigenschaften gegen O₂ und N₂, aber auch schlechtere Barrierewirkung gegen H₂O und CO₂. Entsprechend kann das eine oder das andere Barrierematerial vorteilhaft sein in Abhängigkeit von der geplanten Anwendung. Kommen beispielsweise Mediumrohre aus Kunststoff zum Einsatz wird es wichtiger sein, die Migration von Feuchtigkeit zu ermöglichen um deren Anreicherung im PU-Schaum zu unterbinden. Für den Fall, dass Mediumrohre aus Metall zum Einsatz kommen, ist der Effekt der Migration aus dem transportierten warmen Wasser in den Schaum hinein nicht zu beobachten. In diesem Fall kann es wichtiger sein, die Wärmeleitfähigkeit des Schaums über lange Zeiträume möglichst niedrig zu halten weil die typischerweise verwendeten KMR Rohre eher in der klassischen Fernwärme zum Einsatz kommen, wo grosse Energiemengen transportiert werden und die Verluste möglichst gering gehalten werden müssen.

**Ethylvinylalkohole (EVOH):** In einer weiteren vorteilhaften Ausgestaltung umfasst die Barriere ein Polymer, welches Ethyl-vinylalkohol enthält oder aus Ethyl-vinylalkohol besteht.

In dieser Ausgestaltung weist dass das Polymer zu 50 - 100 Gew.%, bevorzugt zu 80-100 Gew.%, Struktureinheiten der Formel (IV) auf, 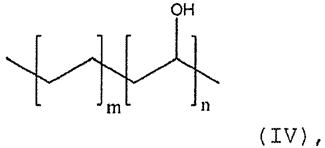 worin
m für 1-10 steht,
n für 2-20 steht.

Geeingete EVOHs sind insbesondere statistische Copolymere in denen das Verhältnis m/n bei 30/100 bis 50/100 liegt. Geeingete EVOHs weisen insbesondere ein Molgewicht Mw von über 20'000, insbesondere von 50'000 - 500'000, auf.

EVOHs sind kommerziell erhältlich, bspw. als EVAL FP Serie oder EP Serie der Fa. Kuraray. Diese zeichnen sich aus durch eine gute Verarbeitbarkeit aus, insbesondere lassen sie sich sehr gut gemeinsam mit dem normalerweise verwendeten Mantelmaterial Polyethylen (PE) durch Coextrusion verarbeiten weil deren Schmelviskositäten und Schmelztemperaturen in einem ähnlichen Bereich liegen.

EVOHs (IV) zeigen im Vergleich zu PKs (II, III) bessere Barriereeigenschaften gegen O₂ und N₂, aber auch bessere Barrierewirkung gegen H₂O und CO₂. Entsprechend sind diese Materialien besonders geeignet in Verwendungen wo H₂O und / oder CO₂ wenig auftritt. Die im Zusammenhang mit PK dargelegten Überlegungen gelten hier entsprechend.

Gas: Wie vorstehend erwähnt, ist das Gas ausgewählt aus der Gruppe der Hydrofluorolefine (HFOs). Dieses Gas kann bspw. das Zellgas (21) eines Schaumstoffs, insbesondere einer Schaumstoffisolierung (20), sein. Dieses Gas kann aus HFOs bestehen oder HFOs enthalten. Typische weitere Komponenten des Gases sind insbesondere (Cyclo)-Alkane, CO₂, N₂, O₂, H₂O.

**Hydroolefine:** HFOs sind bekannt und kommerziell erhältlich bzw. nach bekannten Methoden herstellbar. Der Begriff umfasst sowohl Verbindungen, die nur Kohlenstoff, Wasserstoff und Fluor umfassen, als auch solche Verbindungen, die zusätzlich Chlor enthalten (auch als HFCO bezeichnet) und jeweils mindestens eine ungesättigte Bindung im Molekül enthalten. HFOs können als Gemisch verschiedener Komponenten oder als reine Komponente vorliegen. HFOs können ferner als isomere Gemische, insbesondere E-/Z-Isomere, oder als isomerenreine Verbindungen vorliegen.

Im Rahmen der vorliegenden Erfindung weisen HFOs eine Siedepunkt von über 0°C auf. Im Rahmen der vorliegenden Erfindung sind HFOs ausgewählt aus der Gruppe umfassend Verbindungen der Formel (I), 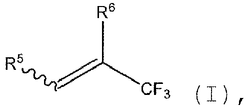 worin R⁵ für H, F, Cl, CF₃ bevorzugt Cl, CF₃, und R⁶ für H, F, Cl, CF₃, bevorzugt H steht.

Besonders geeignete HFOs sind 1233zd (z.B. Solstice LBA, Fa. Honeywell) und 1336mzz (z.B. Formacel 1100, Fa. DuPont). Es hat sich überraschend gezeigt, dass thermisch gedämmte Leitungsrohre ein verbessertes Dämmverhalten aufweisen, wenn die Zellgase (21) der Dämmung (20) zumindest 10 vol%, bevorzugt zumindest 30 vol% besonders bevorzugt mindestens 50 vol% HFO enthalten, und diese Dämmung von einer Barriere (1) wie hier beschrieben umhüllt ist.

**(Cyclo)-Alkane:** Diese sind als Zellgas der Dämmung in thermisch isolierten Rohren bekannt. Vorteilhaft ist das besagte Alkan bzw. Cycloalkan ausgewählt aus der Gruppe umfassend Propan, Butane, Pentane, Cyclopentan, Hexane, Cyclohexan. Durch die Kombination von (Cyclo)-Alkan mit HFO kann eine Feinjustierung der Produkteigenschaften erfolgen, und / oder die Herstellbarkeit verbessert werden und / oder eine Kostenreduktion mit vertretbaren Qualitätseinbussen erfolgen. Die genannten (Cyclo)-Alkane können als reine Verbindung oder als Gemische vorliegen; die aliphatischen Alkane können als isomerenreine Verbindungen oder als Isomerengemische vorliegen. Ein besonders geeignetes (Cyclo)-Alkan ist Cyclopentan (Cp).

**Kohlendioxid (CO₂) :** Diese ist als Zellgas der Dämmung in thermisch isolierten Rohren bekannt, es kann als Nebenprodukt der Herstellung gebildet werden oder in definierter Menge zugegeben werden. Der CO₂-Gehalt eines Zellgases liegt typischerweise unter 50 vol.%.

**Stickstoff (N₂), Sauerstoff (O₂**) : Produktionsbedingt können aus der Atmosphäre / Umgebungsluft Komponenten in das Zellgas gelangen. Dies sind im Wesentlichen N₂ und / oder O₂, bspw. Luft. Der Gehalt an diesen Zellgasen liegt zum Zeitpunkt der Herstellung typischerweise unter 5 vol.%.

**Wasser (H₂O) :** Dieses kann als Gas vorliegen aber auch als Flüssigkeit. Typischerweise gelangt H₂O durch Kondensation aus der Umgebung oder durch Permeation aus einem Medium führenden Element in das Zellgas einer Dämmung.

In einer Ausgestaltung betrifft die Erfindung daher die Verwendung wie hier beschrieben, wobei das Zellgas (21) ein Gemisch ist, umfassend 10-100 vol% HFOs und 0-50 vol% (Cyclo)-Alkane und 0-50 vol% CO₂.

**Schaumstoff:** Wie vorstehend erwähnt, kann das Gas das Zellgas (21) eines Schaumstoffs, insbesondere einer Schaumstoffisolierung (20), sein.

Solche Schaumstoffe sind an sich bekannt, besonders geeignet sind Schaumstoffe, welche die Normen DIN EN 253:2015-12 (insbesondere für KMR) und EN15632-1:2009/A1:2014, EN15632-2:2010/A1:2014 und EN15632-3:2010/A1:2014 (insbesondere für PMR) erfüllen. Der Begriff umfasst Hartschäume und Weichschäume. Schaumstoffe können geschlossenzellig oder offenzellig sein, bevorzugt geschlossenzellig, insbesondere wie z.B. in Norm DIN EN 253:2015-12 dargelegt. Bevorzugt werden solche Schaumstoffe ausgewählt aus der Gruppe der Polyurethane (PU), der Polyisocyanurate (PIR), der thermoplastischen Polyester (insbesondere PET), der thermoplastischen Polyolefine (insbesondere PE und PP).

Die Erfindung betrifft daher auch die Verwendung einer Polymerschicht als Barriere (1) für Gase, wie hier beschrieben, wobei das **Gas das Zellgas eines Schaumstoffs ist** dadurch gekennzeichnet, dass besagter Schaumstoff (Polymer (22) und Zellgas (21)) den folgenden Kriterien genügt:
- PU enthaltend 50-100 vol% 1233zd und 0-50 vol% Cp;
- PU enthaltend 50-100 vol% 1336mzz und 0-50 vol% Cp;
- PIR enthaltend 50-100 vol% 1233zd und 0-50 vol% Cp;
- PIR enthaltend 50-100 vol% 1336mzz und 0-50 vol% Cp;
- PET enthaltend 50-100 vol% 1233zd und 0-50 vol% Cp;
- PET enthaltend 50-100 vol% 1336mzz und 0-50 vol% Cp;
- PE enthaltend 50-100 vol% 1233zd und 0-50 vol% Cp; und / oder
- PE enthaltend 50-100 vol% 1336mzz und 0-50 vol% Cp.

In einer Ausgestaltung ergänzen sich die genannten Zellgase zu 100 vol%. In einer weiteren Ausgestaltung ergänzen sich diese Zellglase zusammen mit CO₂ und Luft zu 100%.

Die Erfindung betrifft ferner die Verwendung wie hier beschrieben, wobei besagte Polymerschicht (1) ein **selbsttragendes Strukturelement** ist. Die Polymerschicht (1) kann daher als Folie oder als Formkörper vorliegen.

Die Erfindung betrifft ferner die Verwendung wie hier beschrieben, wobei besagte Polymerschicht (1) Teil eines **Verbundmaterials** (10) ist. Solche Verbundmaterialien sind an sich bekannt. Für die hier angesprochene Verwendung kann besagtes Verbundmaterial (10) folgenden Schichtaufbau aufweisen: thermoplastisches Polymer (3), optional Haftvermittler (2), Polymerschicht als Barriere (1) wie hier beschrieben, optional Haftvermittler (2'), optional thermoplastisches Polymer (3'). Die Komponenten (2) und (3) sind kommerziell erhältliche, dem Fachmann bekannte, Produkte.

**Thermoplastisches Polymer** (3): Eine breite Auswahl an Thermoplasten kann eingesetzt werden; diese haben typischerweise eine geringere Barrierewirkung als die Schicht (1). Vorteilhaft werden thermoplastische Polmyere (3, 3') ausgewählt aus der Gruppe umfassend kommerzielle PE Typen, wie PE hoher Dichte (HDPE), PE niedriger Dichte (LDPE), lineares PE niedriger Dichte (LLDPE), verwendet.

**Haftvermittler** (2, 2'): Eine breite Auswahl an Haftvermittler kann eingesetzt werden; diese haben typischerweise eine geringere Barrierewirkung als die Schicht (1). Vorteilhaft werden Haftvermittler (2, 2') ausgewählt aus der Gruppe der Pfropfcoploymerisate aus PE mit mindestens einer weiteren Komponente, bspw. Maleinsäureanhydrid. Solche Substanzen sind beispielsweise unter den Markennamen Amplify™ von der Fa Dow oder Admer™ der Fa Mitsui kommerziell erhältlich.

Die **Dicken** der einzelnen genannten Schichten kann über einen breiten Bereich variieren und hängt unter anderem von der gewünschten Barrierewirkung gegenüber den einzelnen Permeenten ab, ferner vom Material und schliesslich von Überlegungen zur Herstellung und zu den Kosten. Folgende Werte haben sich als geeignet erwiesen: Die Schichtdicke der Polymerschicht (1) liegt vorteilhaft im Bereich von 0.01 - 1 mm, bevorzugt im Bereich 0.03 - 0.5 mm, besonders bevorzugt im Bereich 0.05 - 0.3 mm. Die Schichtdicke der Haftvermittlersicht (2, 2') liegt jeweils vorteilhaft im Bereich von 0.01 - 1 mm, bevorzugt im Bereich 0.05 - 0.5 mm, besonders bevorzugt im Bereich 0.1 - 0.3 mm. Die Schichtdicke des thermoplastischen Polymers (3, 3') liegt jeweils vorteilhaft im Bereich von 0.01 - 1 mm, bevorzugt im Bereich 0.05-0.5 mm, besonders bevorzugt im Bereich 0.1-0.3 mm.

Die Erfindung betrifft ferner die Verwendung einer Polymerschicht als Barriere (1) bzw. eines Verbundmaterials (10) für Gase, wie hier beschrieben, in zahlreichen technologischen Feldern. Die erfindungsgemässe Verwendung ist nicht auf eine einzelne Anwendung beschränkt; vielmehr kann sie in allen Gebieten genutzt werden, wo die Barrierewirkung gegenüber HFOs nützlich oder wünschenswert ist.

Entsprechend betrifft die Erfindung die Verwendung einer Polymerschicht (1) wie hier beschrieben oder eines Verbundmaterials (10) wie hier beschrieben
- als Barrierematerial für thermische Isolierungen, insbesondere für Kühlgeräte, für Rohrsysteme in der Nah- und Fernwärme, für Rohrsysteme in der Gebäudekühlung, für Rohrsysteme zum Transport gekühlter Medien, für Rohrsysteme in Industrieanwendungen, für Rohrsysteme zum Transport von Gasen, Flüssigkeiten oder Feststoffen; und/oder
- als Barrierematerial für Verpackungen, insbesondere für Pharmazeutika, Lebensmittel, elektronische Komponenten; und/oder
- als Barrierematerial für Container, Tanks.

**Thermische Isolierungen:** Der Begriff umfasst insbesondere thermisch gedämmten Rohrsysteme aus der Gruppe der Kunststoffmediumrohrsysteme (PMR) und Kunstoffmantelrohrsysteme (KMR). Diese finden Anwendung für den Transport erwärmter oder gekühlter Medien, insbesondere Wasser oder wässriger Lösungen. Aber auch der Transport anderen Substanzen und Chemikalien kann dadurch ermöglicht werden.

Die Erfindung wird anhand der nachfolgenden, nicht limitierenden, **Beispiele** näher erläutert.

In einem Schaumstoff aus der Klasse der Polyurethane liegen am Ende des Herstellungsprozesses zahlreiche Zellgase vor. Eine Zusammenfassung möglicher Zellgase und Ihrer wesentlichen Eigenschaften ist in der Tabelle gezeigt. Die Angaben für die beispielhaften Schaumtypen beziehen sich auf die Werte von frisch hergestellten Schäumen im nicht gealterten Zustand.

| **Zellgas** | **Thermische Leitfähigkeit** | **Gehalt in Schaumtyp 1** | **Gehalt in Schaumtyp 2** |
|---|---|---|---|
| | **[mW/m*K]** | **[Vol %]** | **[Vol %]** |
| **N₂** | 26.0 | 1-2 | 1-2 |
| **O₂** | 26.3 | 1-2 | 1-2 |
| **CO₂** | 16.8 | 58 | 32 |
| **Cp** | 11.5 | 38 | 0 |
| **HFO 1233zd** | 10.0 | 0 | 65 |

### Beispiel 1: Diffusion durch polymere Folien:

Die Diffusion von O₂, N₂, CO₂, HFO1233zd, Cp und H₂O durch verschiedene polymere Folien wurde experimentell bestimmt. Dabei wurde vorgegangen wie in den angegebenen Normen beschrieben. Die Ergebnisse sind in der Tabelle zusammengefasst.

| **Permeent** | **O₂** | **N₂** | **CO₂** | **HFO1233zd** | **Cp** | **H₂O** |
|---|---|---|---|---|---|---|
| **Einheit** | **[cm³/m²*Tag*bar]** | | | **[ml/m²*Tag]** | | |
| **Methode** | ISO15105-1, | | | ISO15105-1 | ISO15105-2 | ISO15106-3 |
| **Temperatur** | 23 °C | | | 23 °C | 23 °C | 23 °C |
| **Luftfeuch tigkeit** | 0 % r. F. | | | - | - | 85 % r. F. |

| | **Experimentell** | | | | | |
|---|---|---|---|---|---|---|
| LDPE | 7'600 | 2'343 | 31'106 | 69'950 | 12'150 | 4.00 |
| PK | 9.90 | 3.30 | 60.3 | 2.45 | < 0.002 | 12.4 |
| PAN | 4.05 | 0.48 | 12.9 | < 0.07 | < 0.002 | 11.7 |
| EVOH | 0.25 | 0.07 | 0.9 | < 0.02 | < 0.002 | 0.5 |

| | | | | | | |
|---|---|---|---|---|---|---|
| Cp: Cyclopentan; PK: Aliphatisches Polyketon; EVOH: Copolymer aus Ethylen und Vinylalkohol; PAN: Polyacrylnitril; LDPE: Polyethylen niedriger Dichte; EVOH ist gemäss der obigen Definition eine gute Barriere für alle betrachteten Permeenten. LDPE weist praktisch keine Barrierewirkung auf, nur im Falle von Wasser kann man von einer teilweisen Barrierewirkung sprechen. Aliphatisches PK und PAN haben gute Barrierewirkung gegen O₂, N₂, HFO und Cp und teilweise Barrierewirkung gegen CO₂ und H₂O. | | | | | | |

Für die praktische Anwendung ist an PAN dessen schwierige Verarbeitung, dessen Sprödigkeit und dessen schlechte kommerzielle Verfügbarkeit nachteilig. EVOH und PK lassen sich gut verarbeiten und sind kommerziell verfügbar.

### Beispiel 2: Messung der Zellgase eines Schaums nach Auslagerung bei verschiedenen Umgebungsbedingungen

Folienbahnen von einer Breite von 20 - 30 cm wurden zu Tüten verschweisst, welche ein Volumen von etwa acht Litern aufwiesen. Diese Tüten wurden ausgeschäumt mit einem PU-Schaum, welcher Cyclopentan als Treibmittel enthielt. Nach Beendigung des Schäumprozesses wurden die Tüten auch am oberen Ende verschweisst.

Dann wurde zunächst je eine Tüte aufgeschnitten und die Zusammensetzung der Zellgase bestimmt (Tag 0). Die anderen Proben wurden in zwei Klimakammern ausgelagert, in der einen Klimakammer herrschte eine Temperatur von 70 °C und eine relative Luftfeuchtigkeit (r. F.) von 10 %, in der anderen Kammer herrschte eine Temperatur von 70 °C und eine relative Luftfeuchtigkeit (r. F.) von 90 %.

Die Werte für die einzelnen Gase in Vol % sind in der Tabelle aufgeführt.

Deutlich zu sehen ist die starke Abhängigkeit der Barrierewirkung von der Feuchtigkeit der Umgebung für die Materialien EVOH und PAN.

Für HFO und Cp wird aus den Ergebnissen des Bsp. 1 eine vergleichbares Ergebnis erwartet. Somit sind EVOH und PK sinnvolle Barriereschichten für diese Gase.

| | **O₂** | | **N₂** | | **CO₂** | | **Cp** | | **Tage** |
|---|---|---|---|---|---|---|---|---|---|
| **r. F.** | **10%** | **90%** | **10%** | **90%** | **10%** | **90%** | **10%** | **90%** | |
| LDPE | 1.1 | 1.1 | 3.2 | 3.2 | 45.0 | 45.0 | 50.7 | 50.7 | 0 |
| | 21.4 | 14.6 | 16.0 | 15.5 | 2.7 | 1.3 | 59.9 | 68.6 | 128 |
| | 20.9 | 15.8 | 40.3 | 28.2 | 0.6 | 7.5 | 38.3 | 48.5 | 190 |
| PK | 0.5 | 0.5 | 1.8 | 1.8 | 54.7 | 54.7 | 43.0 | 43.0 | 0 |
| | 4.9 | 0.9 | 5.2 | 9.0 | 28.2 | 4.6 | 61.7 | 77.4 | 128 |
| | 14.3 | 16.5 | 22.0 | 21.5 | 9.5 | 1.6 | 54.3 | 60.4 | 190 |
| **PAN** | **0.7** | **0.7** | **2.5** | **2.5** | **55.2** | **55.2** | **41.7** | **41.7** | 0 |
| | **1.5** | **10.1** | **2.3** | **12.0** | **60.6** | **6.5** | **45.6** | **71.4** | 128 |
| | **4.3** | **16.1** | **10.3** | **21.4** | **51.8** | **2.4** | **33.7** | **6.0** | 190 |
| **EVOH** | **1.0** | **1.0** | **3.3** | **3.3** | **44.7** | **44.7** | 51.0 | 51.0 | 0 |
| | **1.1** | **10.9** | **2.9** | **11.4** | **64.6** | **2.8** | 31.4 | 74.9 | 128 |
| | **3.2** | **16.7** | **9.1** | **26.6** | **56.9** | **0.9** | 30.8 | 55.8 | 190 |

Während in der vorliegenden Anmeldung bevorzugte Ausführungen der Erfindung beschrieben sind, ist darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verwendung einer Polymerschicht als Barrierematerial (1) für Gase, wobei
die Polymerschicht Teil eines Verbundmaterials ist; die Schichtdicke der Polymerschicht im Bereich von 0.03 - 0.5mm liegt;
das Polymer der Polymerschicht ein Co-Polymer aus Ethylen und Vinylalkohol oder ein Co-Polymer aus Ethylen und Kohlenmonoxid oder ein Co-Polymer aus Ethylen und Kohlenmonoxid und Propylen umfasst;
**dadurch gekennzeichnet, dass** besagtes Gas ausgewählt ist aus der Gruppe der Hydrofluorolefine mit einem Siedepunkt über 0°C, umfassend Verbindungen der Formel (I) 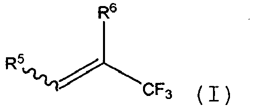 worin R⁵ und R⁶ unabhängig voneinander für H, F, Cl, CF₃ stehen.

2. Die Verwendung nach Anspruch 1, **dadurch gekennzeichnet, dass** besagtes Polymer zu 50 - 100 Gew.%, Struktureinheiten der Formel (II) oder (III) oder (IV) enthält, 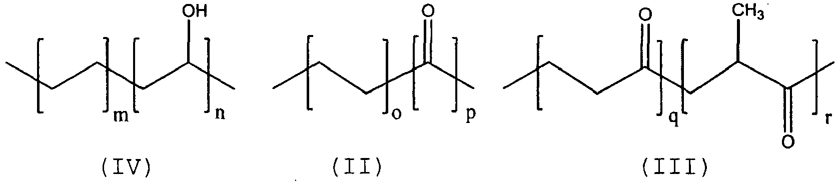 worin
m für 1-10 steht,
n für 2-20 steht, [mit m/n 30/100 bis 50/100]
o für 1 oder 2 steht,
p für 1 oder 2 steht,
q für 1-20 steht und
r für 1-20 steht.

3. Die Verwendung nach Anspruch 1, **dadurch gekennzeichnet, dass** besagtes Polymer entweder
zu 90 - 100 Gew.%, Struktureinheiten der Formel (II) enthält, 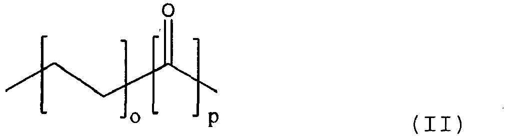 worin o und p für 1 stehen und worin das Polymer bevorzugt ein Molgewicht Mw von über 20'000; oder
zu 90 - 100 Gew.%, Struktureinheiten der Formel (III) enthält, 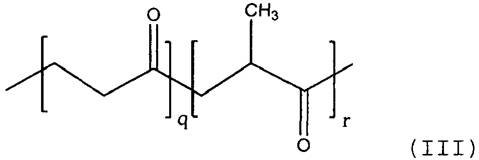 worin q und r unabhängig voneinander für 1-20 stehen, und worin das Polymer ein bevorzugt Molgewicht Mw von über 20'000 hat; oder
zu 90 - 100 Gew.%, Struktureinheiten der Formel (IV) enthält, 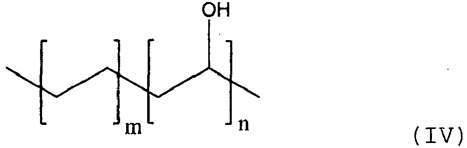 worin m für 1-10 steht, n für 2-20 steht, und worin das Verhältnis von m/n 3/10 bis 5/10 beträgt, und worin das Polymer bevorzugt ein Molgewicht Mw von über 20'000 hat.

4. Die Verwendung nach Anspruch 1, **dadurch gekennzeichnet, dass** besagtes Hydrofluorolefin ausgewählt ist aus der Gruppe 1233zd und 1336mzz.

5. Die Verwendung nach Anspruch 1, **dadurch gekennzeichnet, dass** besagtes HFO ausgewählt ist aus der Gruppe umfassend Hydrofluorolefine wie in Anspruch 4 definiert und mit einem Siedepunkt über 0°C.

6. Die Verwendung nach Anspruch 1, **dadurch gekennzeichnet, dass** besagtes Gas das Zellgas (21) eines Schaumstoffs ist.

7. Die Verwendung nach Anspruch 6, **dadurch gekennzeichnet, dass** besagtes Zellgas (21) ein Gemisch ist, umfassend 10-100 vol% HFOs und 0-50 vol% (Cyclo)-Alkane und 0-50 vol% CO₂.

8. Die Verwendung nach Anspruch 6, **dadurch gekennzeichnet, dass** besagter Schaumstoff ein Polymer (22) ist, ausgewählt aus der Gruppe der Polyurethane (PU), der Polyisocyanurate (PIR), der thermoplastischen Polyester (PET) und der thermoplastischen Polyolefine.

9. Die Verwendung nach Anspruch 6, **dadurch gekennzeichnet, dass** besagter Schaumstoff (Polymer (22) und Zellgas (21)) den folgenden Kriterien genügt:
- PU enthaltend 50-100vol% 1233zd und 0-50vol% Cyclopentan (Cp);
- PU enthaltend 50-100vol% 1336mzz und 0-50vol% Cp;
- PIR enthaltend 50-100vol% 1233zd und 0-50vol% Cp;
- PIR enthaltend 50-100vol% 1336mzz und 0-50vol% Cp;
- PET enthaltend 50-100vol% 1233zd und 0-50vol% Cp;
- PET enthaltend 50-100vol% 1336mzz und 0-50vol% Cp;
- PE enthaltend 50-100vol% 1233zd und 0-50vol% Cp; und/oder
- PE enthaltend 50-100vol% 1336mzz und 0-50vol% Cp.

10. Die Verwendung nach Anspruch 1, **dadurch gekennzeichnet, dass** die Polymerschicht folgende Diffusionskoeffizienten aufweist:
- HFOs kleiner als 5 cm³/m²*Tag*bar;
- O₂ kleiner als 20 cm³/m²*Tag*bar;
- N₂ kleiner als 5 cm³/m²*Tag*bar;
- CO₂ grösser als 0.5 cm³/m²*Tag*bar; und
- H₂O (gas) grösser als 0.4 g/m²*Tag.

11. Die Verwendung nach Anspruch 1, **dadurch gekennzeichnet, dass** besagtes Verbundmaterial (10) folgenden Schichtaufbau aufweist: thermoplastisches Polymer (3), optional Haftvermittler (2), Polymerschicht als Barrierematerial (1) gemäss Anspruch 1, optional Haftvermittler (2'), thermoplastisches Polymer (3').

12. Die Verwendung nach Anspruch 1, **dadurch gekennzeichnet, dass** besagtes Verbundmaterial (10) folgenden Schichtaufbau aufweist: thermoplastisches Polymer (3), optional Haftvermittler (2), Polymerschicht als Barrierematerial (1) gemäss Anspruch 1.

13. Die Verwendung nach Anspruch 11 oder 12, **dadurch gekennzeichnet, dass**
das thermoplastische Polmyer (3, 3') ausgewählt ist aus der Gruppe umfassend PE hoher Dichte (HDPE), PE niedriger Dichte (LDPE), lineares PE niedriger Dichte (LLDPE), und eine Schichtdicke von 0.01 - 1 mm aufweist; und / oder
der Haftvermittler (2, 2')ausgewählt ist aus der Gruppe umfassend die Pfropfcoploymerisate aus PE mit mindestens einer weiteren Komponente, und eine Schichtdicke von 0.01 - 1 mm aufweist.

14. Die Verwendung einer Polymerschicht gemäss Anspruch 1,
als Barrierematerial für thermische Isolierungen, insbesondere für Kühlgeräte, für Rohrsysteme in der Nah- und Fernwärme, für Rohrsysteme in der Gebäudekühlung, für Rohrsysteme zum Transport gekühlter Medien, für Rohrsysteme in Industrieanwendungen, für Rohrsysteme zum Transport von Gasen, Flüssigkeiten oder Feststoffen; und / oder
als Barrierematerial für Verpackungen, insbesondere für Pharmazeutika, Lebensmittel, elektronische Komponenten; und / oder
als Barrierematerial für Container, Tanks.

15. Die Verwendung gemäss Anspruch 14 als Barrierematerial für thermisch gedämmten Rohrsysteme aus der Gruppe der Kunststoffmediumrohrsysteme (PMR) und Kunstoffmantelrohrsysteme (KMR).

## Claims

1. Use of a polymer layer as a barrier material (1) for gases, whereby
the layer thickness of the polymer layer being in the range of 0.03 to 0.5 mm;
the polymer of the polymer layer comprising a copolymer of ethylene and vinyl alcohol or a copolymer of ethylene and carbon monoxide or a copolymer of ethylene and carbon monoxide and propylene;
**characterized in that** said gas is selected from the group of hydrofluoroolefins having a boiling point above 0 °C, comprising compounds of formula (I) 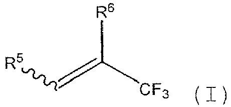 where R⁵ and R⁶ represent, independently of one another, H, F, Cl, CF₃.

2. The use according to claim 1, **characterized in that** said polymer contains 50 to 100 wt.% structural units of formula (II) or (III) or (IV), 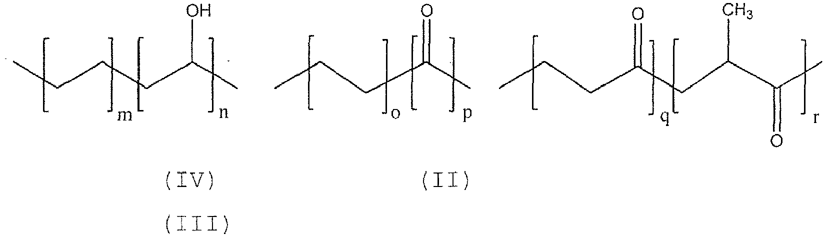 where
m represents 1 to 10,
n represents 2 to 20 (with m/n being 30/100 to 50/100)
o represents 1 or 2,
p represents 1 or 2,
q represents 1 to 20, and
r represents 1 to 20.

3. The use according to claim 1, **characterized in that** said polymer contains either 90 to 100 wt.% structural units of formula (II) 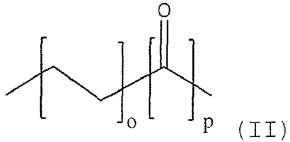 where o and p represent 1 and where the polymer preferably has a molecular weight Mw of more than 20,000; or
90 to 100 wt.% structural units of formula (III), 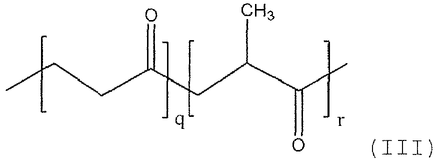 where q and r represent, independently of one another, 1 to 20, and where the polymer has a preferable molecular weight Mw of more than 20,000; or
90 to 100 wt.% structural units of formula (IV), 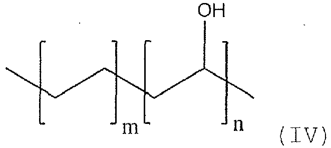 where m represents 1 to 10, n represents 2 to 20 and where the relationship m/n is from 3/10 to 5/10, and where the polymer preferably has a molecular weight Mw of more than 20,000.

4. The use according to claim 1, **characterized in that** said hydroolefin is selected from the group 1233zd and 1336mzz.

5. The use according to claim 1, **characterized in that** said HFO is selected from the group consisting of hydrofluoroolefins as defined in claim 4, which have a boiling point above 0 °C.

6. The use according to claim 1, **characterized in that** said gas is the cell gas (21) of a foam.

7. The use according to claim 6, **characterized in that** said cell gas (21) is a mixture comprising 10 to 100 vol. % HFOs and 0 to 50 vol. % (cyclo) alkane and 0 to 50 vol. % CO₂.

8. The use according to claim 6, **characterized in that** said foam is a polymer (22) selected from the group of polyurethanes (PU), polyisocyanurates (PIR), thermoplastic polyesters (PET) and thermoplastic polyolefins.

9. The use according to claim 6, **characterized in that** said foam (polymer (22) and cell gas (21)) meets the following criteria:
- PU containing 50 to 100 vol.% 1233zd and 0 to 50 vol.% cyclopentane (Cp);
- PU containing 50 to 100 vol.% 1336mzz and 0 to 50 vol.% Cp;
- PIR containing 50 to 100 vol.% 1233zd and 0 to 50 vol.% Cp;
- PIR containing 50 to 100 vol.% 1336mzz and 0 to 50 vol.% Cp;
- PET containing 50 to 100 vol.% 1233zd and 0 to 50 vol.% Cp;
- PET containing 50 to 100 vol.% 1336mzz and 0 to 50 vol.% Cp;
- PE containing 50 to 100 vol.% 1233zd and 0 to 50 vol.% Cp; and/or
- PE containing 50 to 100 vol.% 1336mzz and 0 to 50 vol.% Cp.

10. The use according to claim 1, **characterized in that** the polymer layer has the following diffusion coefficients:
- HFOs less than 5 cm³/m²*day*bar;
- O₂ less than 20 cm³/m²*day*bar;
- N₂ less than 5 cm³/m²*day*bar;
- CO₂ more than 0.5 cm³/m²*day*bar; and
- H₂O (gas) more than 0.4 g/m²*day.

11. The use according to claim 1, **characterized in that** said composite material (10) has the following layered structure: thermoplastic polymer (3), optional adhesion promoter (2), polymer layer as a barrier material (1) according to claim 1, optional adhesion promoter (2'), optional thermoplastic polymer (3').

12. The use according to claim 1, **characterized in that** said composite material (10) has the following layered structure: thermoplastic polymer (3), optional adhesion promoter (2), polymer layer as a barrier material (1) according to claim 1.

13. The use according to claim 12, **characterized in that** the thermoplastic polymer (3, 3') is selected from the group consisting of high-density PE (HDPE), low-density PE (LDPE), linear low-density PE (LLDPE) and has a layer thickness of 0.01 to 1 mm; and/or
the adhesion promoter (2, 2') is selected from the group consisting of PE graft copolymers, which have at least one other component, and has a layer thickness of 0.01 to 1 mm.

14. The use of a polymer layer according to claim 1 or of a composite material according to claim 11
as a barrier material for laggings, in particular for cooling devices, for pipe systems for local and district heating, for pipe systems for cooling buildings, for pipe systems for transporting cooled media, for pipe systems in industrial applications, for pipe systems for transporting gases, liquids or solids; and/or
as a barrier material for packaging, in particular for pharmaceuticals, food and electronic components; and/or as a barrier material for containers and tanks.

15. The use as according to claim 14 for thermally insulated pipe systems from the group of plastics medium pipe systems (PMP) and plastics jacketed pipe systems (PJP).

## Revendications

1. Utilisation d'une couche de polymère comme matériau barrière (1) pour des gaz, dans laquelle
la couche de polymère fait partie d'un matériau composite;
l'épaisseur de la couche de polymère est comprise entre 0,03 et 0,5 mm;
le polymère de la couche de polymère comprend un copolymère d'éthylène et d'alcool vinylique ou un copolymère d'éthylène et de monoxyde de carbone ou un copolymère d'éthylène et de monoxyde de carbone et de propylène;
**caractérisée en ce que** ledit gaz est choisi dans le groupe des hydrofluorooléfines ayant un point d'ébullition supérieur à 0°C, comprenant des composés de formule (I) 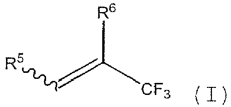 dans laquelle R⁵ et R⁶ sont indépendamment l'un de l'autre H, F, Cl, CF₃.

2. L'utilisation selon la revendication 1, **caractérisée en ce que** ledit polymère contient 50 à 100 % en poids d'unités structurelles de formule (II) ou (III) ou (IV), 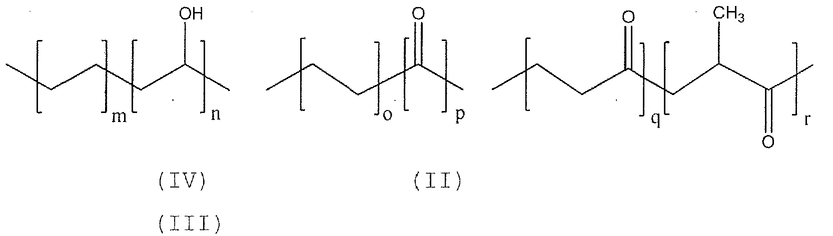 dans laquelle
m représente 1-10,
n représente 2-20,[avec m/n 30/100 à 50/100],
o représente 1 ou 2,
p représente 1 ou 2,
q représente 1-20 et
r représente 1-20.

3. L'utilisation selon la revendication 1, **caractérisée en ce que** ledit polymère comprend soit
à 90 - 100 % en poids des unités structurelles de formule (II), 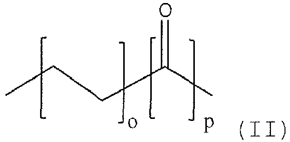 dans laquelle o et p sont égaux à 1 et dans laquelle le polymère a de préférence un poids moléculaire Mw supérieur à 20000; soit
à 90 - 100 % en poids des unités structurelles de formule (III), 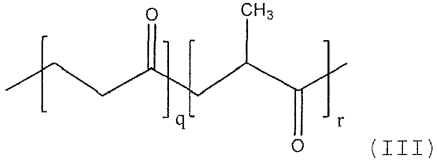 dans laquelle q et r représentent indépendamment l'un de l'autre 1-20, et dans laquelle le polymère a un poids moléculaire préféré Mw supérieur à 20000; soit
à 90 - 100 % en poids des unités structurelles de formule (IV), 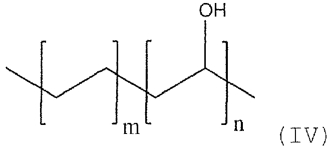 dans laquelle m représente 1 à 10, n représente 2 à 20, et dans laquelle le rapport m/n est de 3/10 à 5/10, et dans laquelle le polymère a de préférence un poids moléculaire Mw supérieur à 20000.

4. L'utilisation selon la revendication 1, **caractérisée en ce que** ladite hydrofluorooléfine est choisie dans le groupe constitué de 1233zd et 1336mzz.

5. L'utilisation selon la revendication 1, **caractérisée en ce que** ledit HFO est choisi dans le groupe comprenant les hydrofluorooléfines telles que définies dans la revendication 4 et ayant un point d'ébullition supérieur à 0°C.

6. L'utilisation selon la revendication 1, **caractérisée en ce que** ledit gaz est le gaz de cellule (21) d'une mousse.

7. L'utilisation selon la revendication 6, **caractérisée en ce que** ledit gaz de cellule (21) est un mélange comprenant 10-100% en volume de HFOs et 0-50% en volume de (cyclo)alcanes et 0-50% en volume de CO₂.

8. L'utilisation selon la revendication 6, **caractérisée en ce que** ladite mousse est un polymère (22) choisi dans le groupe des polyuréthanes (PU), polyisocyanurates (PIR), polyesters thermoplastiques (PET) et polyoléfines thermoplastiques.

9. L'utilisation selon la revendication 6, **caractérisée en ce que** ladite mousse (polymère (22) et gaz de cellule (21)) satisfait aux critères suivants:
- PU contient 50-100 %vol 1233zd et 0-50 %vol cyclopentane (Cp);
- PU contient 50-100 %vol 1336mzz et 0-50 %vol Cp;
- PIR contient 50-100 %vol 1233zd et 0-50vol% Cp ;
- PIR contient 50-100 %vol 1336mzz et 0-50 %vol Cp;
- PET contient 50-100 %vol 1233zd et 0-50 %vol Cp;
- PET contient 50-100 %vol 1336mzz et 0-50 %vol Cp;
- PE contient 50-100 %vol 1233zd et 0-50 %vol Cp; et/ou
- PE contient 50-100 %vol 1336mzz et 0-50 %vol Cp.

10. L'utilisation selon la revendication 1, **caractérisée en ce que** la couche polymère présente les coefficients de diffusion suivants:
- HFO de moins de 5 cm³/m²*jour*bar;
- O2 inférieur à 20 cm³/m²*jour*bar;
- N2 inférieur à 5 cm³/m²*jour*bar;
- CO2 supérieur à 0,5 cm³/m²*jour*bar*bar; et
- H2O (gaz) supérieur à 0,4 g/m²*jour.

11. L'utilisation selon la revendication 1, **caractérisée en ce que** ledit matériau composite (10) présente la structure de couche suivante: polymère thermoplastique (3), éventuellement promoteur d'adhérence (2), couche polymère comme matériau barrière (1) selon la revendication 1, éventuellement promoteur d'adhérence (2'), polymère thermoplastique (3').

12. L'utilisation selon la revendication 1, **caractérisée en ce que** ledit matériau composite (10) a l'agencement des couches suivant: polymère thermoplastique (3), éventuellement promoteur d'adhérence (2), couche polymère comme matériau barrière (1) selon la revendication 1.

13. L'utilisation selon la revendication 11 ou 12, **caractérisé en ce que**
le polymère thermoplastique (3, 3') est choisi dans le groupe constitué de PE haute densité (HDPE), PE basse densité (LDPE), PE linéaire basse densité (LLDPE) et il a une épaisseur de couche de 0,01 à 1 mm; et/ou
le promoteur d'adhérence (2, 2') est choisi dans le groupe comprenant les copolymères greffés de PE avec au moins un autre composant, et il a a une épaisseur de couche de 0,01 - 1 mm.

14. L'utilisation d'une couche polymère selon la revendication 1
comme matériau barrière pour l'isolation thermique, en particulier pour des appareils de réfrigération, pour des systèmes de tuyauterie du chauffage local et urbain, pour des systèmes de tuyauterie du refroidissement des bâtiments, pour des systèmes de tuyauterie du transport de fluides réfrigérés, pour des systèmes de tuyauterie des applications industrielles, pour des systèmes de tuyauterie du transport de gaz, liquides ou solides; et/ou
comme matériau barrière pour l'emballage, en particulier pour des produits pharmaceutiques, des aliments, des composants électroniques; et/ou
comme matériau barrière pour des récipients, des réservoirs.

15. L'utilisation selon la revendication 14 pour les systèmes de canalisations à isolation thermique du groupe des systèmes de canalisations à membrane plastique (PMR) et des systèmes de canalisations à enveloppe plastique (KMR).
